# EUROPÄISCHE PATENTSCHRIFT

(11) **EP 2 181 162 B1**
(45) Veröffentlichungstag und Bekanntmachung des Hinweises auf die Patenterteilung: **03.10.2012**
(21) Anmeldenummer: 08760448.4
(22) Anmeldetag: 04.06.2008
(51) Int. Cl.: C08G 77/14, C08L 83/04, C09D 183/04, C09J 183/04, C09D 5/08, C09D 5/12, C09D 163/10, C09D 175/16

(54) **STRAHLENHÄRTBARE FORMULIERUNGEN**
RADIATION-CURABLE FORMULATIONS
FORMULATIONS DURCISSABLES PAR RAYONNEMENT

(30) Priorität: 25.08.2007 DE 102007040246
(43) Veröffentlichungstag der Anmeldung: 05.05.2010
(73) Patentinhaber: Evonik Degussa GmbH, 45128 Essen (DE)
(72) Erfinder: SPYROU, Emmanouil, 46514 Schermbeck (DE); KOSCHABEK, René, 68259 Mannheim (DE); STANDKE, Burkhard, 79540 Lörrach (DE)
(86) Internationale Anmeldenummer: PCT/EP2008/056865
(87) Internationale Veröffentlichungsnummer: WO 2009/027124

(56) Entgegenhaltungen:
- EP-A- 0 978 525
- EP-A- 1 693 690

## Beschreibung

Die vorliegende Erfindung betrifft die Verwendung von oligomeren Siloxan-Komponenten in strahlenhärtbaren Formulierungen, die im ausgehärteten Zustand im besonderen Maße einen Korrosionsschutz für metallische Substrate bieten.

Strahlenhärtbare Formulierungen sind bekannt.
Ethylenische ungesättigte Prepolymere werden z. B. in P. K. T. Oldring (Hrsg.), "Chemistry and Technology of UV- and EB-Formulations for Coatings, Inks and Paints", Vol. II. SITA Technology, London 1991 beschrieben, beispielsweise auf Basis von Epoxyacrylaten (Seiten 31 bis 68), Urethanacrylaten (Seiten 73 bis 123) und Melaminacrylaten (Seiten 208 bis 214). Auch in der Patentliteratur finden solche Formulierungen häufig Erwähnung, exemplarisch seien genannt JP 62110779 und EP 947 565.

Die Beschichtung von metallischen Untergründen stellt ein besonderes Problem für strahlenhärtbare Formulierungen dar, da es aufgrund von Schrumpfungsprozessen zu einem Haftungsverlust kommen kann. Daher werden für solche Untergründe häufig phosphorsäurehaltige Haftvermittler eingesetzt. Beispiele dafür sind US 5,128,387 (Beschichtung von Bierdosen) und JP 2001172554 (Beschichtung von diversen Dosen).

Bekanntermaßen zeigen Epoxyacrylate eine hervorragende Haftung sowie einen guten Korrosionsschutz auf Metalluntergründen. Nachteil solcher Beschichtungen ist aber die geringe Verformbarkeit nach der Aushärtung. Für einige Beschichtungstechnologien, z. B. Coil-Coating ist die Verformbarkeit der beschichteten Werkstücke ohne Bildung von Rissen in der Beschichtung ausschlaggebend. Außerdem neigen solche Beschichtungen aufgrund ihrer aromatischen Anteile zum Vergilben.

WO 03/022945 beschreibt niederviskose strahlenhärtbare Formulierungen für Metalluntergründe auf Basis von strahlenhärtbaren Harzen, monofunktionellen Reaktivverdünnern und sauren Haftvermittlern. Die eingesetzten Harze sind dabei übliche, bei verschiedenen Anbietern erhältliche Verkaufsprodukte.

Auch EP 902 040 betrifft strahlenhärtbare Formulierungen. Darin werden Urethan(meth)acrylate mit monofunktionellen Estern einer ungesättigten Carbonsäure beschrieben, welche mit Alkoholen verestert sind, die einen Carbocyclus oder einen Heterocyclus enthalten.

Das Dokument JP60197771 A offenbart strahlenhärtbare Zusammensetzungen, die als Beschichtungen mit Antikorrosions-Eigenschaften verwendet werden. Die strahlenhärtbaren Zusammensetzungen umfassen A) 70 Gew.-% eines Alkoxysilans, B) 30 Gew.-% eines Urethan(meth)acrylat-Harzes und C) einen Photoinitiator. Es wird in JP60197771 A auch offenbart, dass das Alkoxysilan durch Hydrolyse partiell kondensiert wird.

Die aus dem Stand der Technik bekannten Systeme zeigen aber vielfach Nachteile, insbesondere die Verformbarkeit und die Stabilität erfüllen nicht immer die gestellten Anforderungen.

Aufgabe der vorliegenden Erfindung ist es, strahlenhärtbare Formulierungen zu finden, die einerseits nach der Beschichtung gut verformbar, das heißt flexibel sind, andererseits aber auch einen hervorragenden Korrosionsschutz für Metalluntergründe gewährleisten.

Überraschend wurde gefunden, dass die Korrosionsfestigkeit von Lacken auf Basis von strahlenhärtbaren Formulierungen auf metallischen Untergründen ansteigt, wenn oligomere Siloxan-Komponenten in der Formulierung enthalten sind. Strahlenhärtbare Formulierungen im Sinne der vorliegenden Erfindung meint Formulierungen, die mit IR- oder UV-Strahlung, Elektronenstrahlen, Mikrowellenstrahlung, Laserstrahlung oder mittels Plasma gehärtet werden können.

Besonders geeignet sind hydrolysierte und kondensierte Organosilane, die erhältlich sind durch kontrollierte Hydrolyse und Kondensation mindestens eines Epoxy-funktionellen Silans der allgemeinen Formel I

R¹-SiR'ₘ(OR)₃₋ₘ (I),

worin R¹ für eine Gruppe 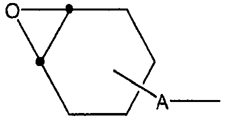 oder 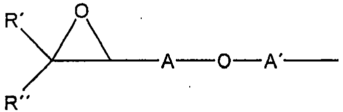 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, Gruppen A und A' gleich oder verschieden sind und jeweils für eine bivalente Alkylgruppe mit 1 bis 10 C-Atomen stehen, vorzugsweise -(CH₂)₂-, -(CH₂)₂-, -(CH₂)₃-, -(CH₂)(CH)(CH₃)(CH₂)- für A' sowie -(CH₂)- für A, und m gleich 0 oder 1 ist, in Gegenwart von Borsäure [H₃BO₃ bzw. B(OH)₃].

Gegenstand der vorliegenden Erfindung sind strahlenhärtbare Formulierungen umfassend mindestens ein strahlenhärtbares Harz und mindestens 2 Gew.-% mindestens einer oligomeren Siloxan-Komponente, gemäβ Anspruch 1 bezogen auf die Gesamtformulierung. Eine bevorzugte strahlenhärtbare Formulierung gemäß der vorliegenden Erfindung ist insbesondere jene bestehend aus
A) mindestens einem strahlenhärtbaren Harz,
B) mindestens 2 Gew.-% mindestens einer oligomeren Siloxan-Komponente, gemäβ Anspruch 1 bezogen auf die Gesamtformulierung,
C) optional einem oder mehreren Haftvermittlern,
D) optional einem oder mehreren strahlenhärtbaren Reaktivverdünnern,
E) optional einem oder mehreren Photoinitiatoren,
F) optional einem oder mehreren Pigmenten und sonstigen Zuschlagstoffen.

Die erfindungsgemäßen strahlenhärtbaren Formulierungen haben den Vorteil, dass bei Anwendung eine verbesserte Flexibilität und ein guter Korrosionsschutz erreicht werden.

Ein wesentlicher Bestandteil der erfindungsgemäßen Formulierungen sind die strahlenhärtbaren Harze A). Hierbei handelt es sich um für den Fachmann bekannte Systeme. Die Herstellung strahlenhärtbarer Harze, Oligomere und/oder Polymere, wird z. B. in "Radiation Curing in Polymer Science & Technology, Vol I: Fundamentals and Methods" von J. P. Fouassier, J. F. Rabek, Elsevier Applied Science, London und New York, 1993, Chapter 5, Seiten 226 bis 236, in "Lackharze", D. Stoye, W. Freitag, Hanser-Verlag, Wien, 1996 , Seiten 85, 94 - 98, 169 und 265 und in der EP 947 565 beschrieben.

Je nach Rohstoffbasis können die Harze A) beispielsweise Epoxyacrylate, Polyesteracrylate, Polyetheracrylate, Polyacrylatacrylate, und Urethanacrylate, allein oder in Form von Mischungen, sein. Im Falle der Urethanacrylate können diese z. B. auf Polyestern oder aber auch auf Polyethern basieren. Auch die entsprechenden Methacrylate sind bekannt. Andere polymerisationsfähige Gruppen sind Epoxide und Vinylether. Auch diese können an verschiedenen Basisharzen angebunden sein.

Die Menge A) in der Formulierung variiert von 5 bis 95 Gew.-%, bevorzugt 10 bis 39 Gew.-%. Besonders bevorzugt sind Polyesterurethanacrylate. Beispiele dafür sind VESTICOAT EP 110 IBOA (Handelsprodukt der Degussa GmbH, Deutschland, Coatings & Colorants, Difunktionelles Polyesterurethanacrylat) und EBECRYL 1256 (Handelsprodukt von Cytec).

Ein weiterer wesentlicher Bestandteil der erfindungsgemäßen Formulierungen sind die oligomeren Siloxan-Komponenten (B). Der Anteil an oligomeren Siloxan-Komponenten B) an der Gesamtformulierung beträgt insbesondere 2 bis 25 Gew.-%, bevorzugt 5 bis 15 Gew.-%. Ein allgemein bekanntes Verfahren zur Herstellung solcher hydrolysierten Organosilane (B) ist der Sol-Gel-Prozess, wie er von C. J. Brinker und G. W. Scherer in Sol-Gel Science: The Physics and Chemistry of Sol-Gel Processing, Academic Press, New York (1990) ausführlich beschrieben wird.

Die oligomeren Siloxan-Komponenten sind erhältlich durch kontrollierte Hydrolyse und Kondensation mindestens eines Epoxyfunktionellen Silans der allgemeinen Formel I

R¹-SiR'ₘ(OR)₃₋ₘ (I),

worin R¹ für eine Gruppe 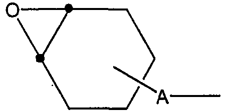 oder 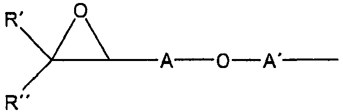 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, Gruppen A und A' gleich oder verschieden sind und jeweils für eine bivalente Alkylgruppe mit 1 bis 10 C-Atomen stehen, vorzugsweise -(CH₂)₂-, -(CH₂)₂-, -(CH₂)₃-, -(CH₂)(CH)(CH₃)(CH₂)- für A' sowie -(CH₂)- für A, und m gleich 0 oder 1 ist, in Gegenwart von Borsäure.

Üblicherweise wird bei der Herstellung von Sol-Gel-Systemen das Wasser meist im Überschuss eingesetzt. Ziel ist dabei, eine möglichst vollständige Hydrolyse zu erreichen. Viele Silane hydrolysieren unter diesen Bedingungen leider nicht vollständig. Beispielsweise verbleibt bei der Hydrolyse von 3-Glycidyloxypropyltrimethoxysilan auch bei einer hohen Konzentration an sauren Katalysatoren, wie HCl oder Essigsäure, auch nach Stunden und auch nach Hydrolyse bei erhöhter Temperatur ein Monomeranteil von ca. 90 % (Flächenprozent GC WLD).
Hierzu wurde in einer Parallelanmeldung eine neue Methode bereitgestellt, die es erlaubt, Epoxy-funktionelle Silane, insbesondere 3-Glycidyloxypropylalkoxysilane als solche oder entsprechende 3-Glycidyloxypropylalkoxysilan enthaltende Gemische von Organoalkoxysilanen, mit einer unterstöchiometrischen Menge an Wasser sicher und möglichst vollständig unter Einsatz von Borsäure zu hydrolysieren und zumindest anteilig zu kondensieren.

Das verwendete Siloxan-Oligomer kovernetzt bei der Aushärtung der Beschichtung mit beispielsweise einem organischen Polyesterurethanacrylat und kann durch weitere funktionelle Gruppen zur besseren Substrathaftung beitragen.

Bei der Hydrolyse und Kondensation kann zusätzlich mindestens ein weiteres organofunktionelles Silan der allgemeinen Formel II

R²-SiR'ₙ(OR)₃₋ₙ (II)

worin R² eine lineare, verzweigte oder cyclische, gegebenenfalls substituierte Alkylgruppe mit 1 bis 20 C-Atomen darstellt, beispielsweise substituiert mit N-, O-, S-, Halogen-tragenden Gruppen, wie Fluoralkyl, Aminoalkyl, Mercaptoalkyl, Methacryloxyalkyl oder OR, d. h. OH oder Alkoxy, insbesondere Methoxy oder Ethoxy, R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist, anwesend sein. Gemäß Formen 11 kann man beim erfindungsgemäßen Verfahren vorteilhaft Methoxy- oder Ethoxysilane verwenden, die insbesondere eine funktionelle Gruppe R² aus der Reihe Methoxy, Ethoxy, Methyl, Ethyl, n-Propyl, i-Propyl, n-Butyl, n-Octyl, i-Octyl, Tridecafluor-1,1,2,2-tetrahydroctyl - um nur einige Beispiele zu nennen - tragen, beispielsweise - aber nicht ausschließlich - Methyltrimethoxysilan, Methyltriethoxysilan, Vinyltrimethoxysilan, Vinyltriethoxysilan, n-Propyltrimethoxysilan, n-Propyltriethoxysilan, n-Octyltrimethoxysilan, n-Octyltriethoxysilan, Hexadecyltrimethoxysilan, Hexadecyltriethoxysilan, Tridecafluor-1,1,2,2-tetrahydrooctyltrimethoxysilan, Tridecafluor-1,1,2,2-tetrahydrooctyltriethoxysilan, Methacryloxypropyltrimethoxysilan, Methacryloxypropyltriethoxysilan, Mercaptopropyltrimethoxysilan, Mercaptopropyltriethoxysilan, Tetramethoxysilan, Tetraethoxysilan.

Bei der Herstellung der Siloxan-Komponente werden pro Mol Alkoxyfunktion der eingesetzten Silane 0,001 bis ≤ 5 Mol Wasser eingesetzt, neben Borsäure als Hydrolysekatalysator und Kondensationskomponente wird kein weiterer Hydrolyse- bzw. Kondensationskatalysator verwendet und die bei der Umsetzung gebildeten Kondensate basieren auf Si-O-B und/oder Si-O-Si-Bindungen.

Bevorzugt verwendet man bei der Umsetzung pro Mol eingesetzter Alkoxyfunktion gemäß Formel und/oder II 0,05 bis 5 Mol besonders bevorzugt 0,1 bis 2 Mol, ganz besonders bevorzugt 0,15 bis 1 Mol, insbesondere alle numerischen Zwischenwerte zwischen 0,15 bis 1 Mol, beispielsweise aber nicht ausschließlich 0,2, 0,3, 0,4, 0,5, 0,6, 0,7, 0,8, 0,9 Mol Wasser.

Ferner bevorzugt man beim Verfahren pro Mol eingesetztes Silan 0,001 bis 1 Mol Bor, besonders vorzugsweise 0,01 bis 0,5, insbesondere 0,07 bis 0,76 Mol Bor, das vorteilhaft in Form von Borsäure [H₃BO₃ bzw. B(OH)₃] eingestellt wird.

Auch führt man beim Verfahren die Umsetzung vorteilhaft bei einer Temperatur im Bereich von 0 bis 200 °C, bevorzugt bei 40 bis 150 °C, besonders bevorzugt von 50 bis 100 °C, ganz besonders bevorzugt 60 bis 80 °C, durch.

So führt man die Umsetzung insbesondere unter guter Durchmischung über 0,1 bis 100 h, bevorzugt 0,5 bis 20 h, besonders bevorzugt 1 bis 10 h, ganz besonders bevorzugt über 2 bis 6 h durch.

Ebenfalls ist kann bei dem genannten Verfahren vorteilhaft aus dem so erhaltenen Produktgemisch den darin vorliegenden Alkohol und/oder Borsäureester in einer konventionellen Destillation unter vermindertem Druck zumindest anteilig entfernen. Man kann solche Bestandteile aber auch mittels Kurzweg- bzw. Dünnschichtverdampfer aus dem Produkt entfernen.

Darüber hinaus kann man so erhaltene Produkte - falls erforderlich - filtrieren oder zentrifugieren, um Schwebpartikel abzutrennen. Dazu kann man beispielsweise einen Filter oder eine Zentrifuge verwenden.

Insbesondere bevorzugt ist das Glycidylpropylalkoxysilan der allgemeinen Formel I Glycidyloxypropyltrimethoxy- oder ethoxysilan.

Beispielsweise kann man vorteilhaft eine praktisch vollständige Hydrolyse von 3-Glycidyloxypropyltrimethoxysilan (GLYMO) mit einer Wassermenge von 0,05 bis 5, bevorzugt 0,1 bis 2, insbesondere 0,15 bis 1 mol Wasser pro mol eingesetzter Alkoxyfunktion unter Einsatz bzw. in Gegenwart von Borsäure durchführen. Insbesondere kann man innerhalb von nur 7 Stunden mittels Borsäure-katalyse so gut wie das komplette GLYMO zu oligomeren Produkten umsetzen. Eine praktisch vollständige Hydrolyse bedeutet in diesem Zusammenhang, dass weniger als 20 Gew.-% oder Flächen-% (GC-WLb-%) des ursprünglich eingesetzten monomeren Silans nach Ausführung der Hydrolyse im Reaktionsraum unhydrolysiert verbleiben.

Die Reaktionskontrolle (Bestimmung der Konzentration an monomeren Silanen im Reaktionsgemisch) erfolgt bevorzugt über Standard Gaschromatografie (HP 5890 Series II, Wärmeleitfähigkeitsdetektor). Die Temperaturmessung kann konventionell über Thermoelemente erfolgen. Druckmessung erfolgt beispielsweise über Piezodruckaufnehmer (z. B. Vacubrand DVR 2). Der Restmonomergehalt in den Produkten kann zusätzlich über ²⁹Si NMR Spektroskopie überprüft werden und liegt vorteilhaft im Bereich von 5 bis 17 mol-%. Der Vernetzungsgrad des Produktes wurde durch Bestimmung der M, D, T Struktureinheiten via ²⁹Si NMR Spektroskopie ermittelt. In den erfindungsgemäßen Silankondensaten liegt der Anteil an M-Struktureinheiten bevorzugt im Bereich von 14 bis 35 mol-%, der an D-Strukturen im Bereich von 36 bis 42 mol-% und der an T-Strukturen im Bereich von 15 bis 34 %. Die Hydro-Methanolyse der Epoxidgruppe kann via ¹³C NMR Spektroskopie bestimmt werden. Die erfindungsgemäßen Produktzusammensetzungen enthalten vorteilhaft nur einen Anteil von 3 bis 7 mol-% geöffnetes Epoxid bezogen auf den ursprünglich eingesetzten Epoxidanteil.

Optional können die erfindungsgemäßen Formulierungen Haftvermittler C) enthalten. In der Regel bestehen Haftvermittler für strahlenhärtbare Formulierungen für metallische Untergründe aus Phosphorsäure und/oder Phosphonsäure und/oder deren Umsetzungsprodukten (z. B. Ester) mit funktionalisierten Acrylaten. Während die freien Phosphorsäuregruppen für die direkte Haftung auf dem Metall verantwortlich sind, sorgen die Acrylatgruppen für einen Verbund mit der Beschichtungsmatrix. Solche Produkte werden beispielsweise beschrieben in WO 01/98413, in JP 08231564, und in JP 06313127, deren Offenbarung hiermit unter Bezugnahme mit eingeschlossen ist.

Typische Handelsprodukte sind EBECRYL 169 und 170 von Cytec, ALDITOL Vxl 6219 von VIANOVA, CD 9050 und CD 9052 von Sartomer, SIPOMER PAM-1 00, SIPOMER PAM-200 und SIPOMER PAM-300 von Rhodia und GENORAD 40 von Rahn. Die Menge an C) in der Formulierung beträgt 0,1 bis 10 Gew.-%, bevorzugt von 1 bis 5 Gew.-%.

In den erfindungsgemäßen Formulierungen können ebenfalls strahlenhärtbare Reaktivverdünner D) enthalten sein. Strahlenhärtbare Reaktivverdünner D) und ihre Herstellung werden z. B. in "Radiation Curing in Polymer Science & Technology, Vol I: Fundamentals and Methods" von J. P. Fouassier, J. F. Rabek , Elsevier Applied Science, London und New York, 1993, Chapter 5, Seiten 237 bis 240 beschrieben. Es handelt sich dabei in der Regel um Acrylat- oder Methacrylat-haltige Stoffe, die bei Raumtemperatur flüssig und damit in der Lage sind, die Gesamtviskosität der Formulierung herabzusetzen. Beispiele für solche Produkte sind insbesondere Isobornylacrylat, Hydroxypropylmethacrylat, Trimethylolpropanformalmonoacrylat, Tetrahydro-fufurylacrylat, Phenoxyethylacrylat, Trimethylenpropantriacrylat, Dipropylenglycoldiacrylat, Tripropylenglycoldiacrylat, Hexandioldiacrylat, Pentaerythrittetraacrylat, Laurylacrylat sowie propoxilierte oder ethoxilierte Varianten dieser Reaktivverdünner und/oder urethanisierte Reaktivverdünner wie EBECRYL 1039 (Cytec) und andere. Außerdem in Frage kommen auch andere flüssige Komponenten, die in der Lage sind, unter Bedingungen der radikalischen Polymerisation mit z. B. Vinylether oder Allylether zu reagieren. Die Menge an D) in der Formulierung beträgt 5 bis 90 Gew.-%, bevorzugt 10 bis 70 Gew.-%.

Ebenfalls in den erfindungsgemäßen Formulierungen können Photoinitiatoren E) enthalten sein. Geeignete Photoinitiatoren und ihre Herstellung werden z. B. in "Radiation Curing in Polymer Science & Technology, Vol II: Photoinitiating Systems" von J. P. Fouassier, J. F. Rabek , Elsevier Applied Science, London und New York, 1993 beschrieben. Häufig handelt es sich hierbei um α-Hydroxyketone bzw. Derivate dieser. Die Photoinitiatoren können, falls vorhanden, in Mengen von 0,2 bis 10 Gew.-% enthalten sein.

Geeignete Pigmente F) für strahlenhärtbare Formulierungen gemäß der vorliegenden Erfindung werden, z. B. in "Radiation Curing in Polymer Science & Technology, Vol IV: Practical Aspects and Application" von J. P. Fouassier, J. F. Rabek , Elsevier Applied Science, London und New York, 1993, Chapter 5, Seiten 87 bis 105 beschrieben und können in Mengen von 1 bis 40 Gew.-% enthalten sein. Beispiele für Korrosionsschutzpigmente findet man z. B. in Pigment + Füllstoff Tabellen, O. Lückert, Vincentz Verlag Hannover, 6. Auflage 2002. Beispielhaft seien genannt: SHIELDEX C 303 (Grace Davison) und HALOX Coil X 100, HALOX Coil X 200 und HALOX CW 491 (Erbslöh), HEUCOPHOS SAPP oder auch ZPA (Heubach), K-White TC 720 (Tayca) und HOMBICOR (Sachtleben). Natürlich kommen auch einfache anorganische Salze wie z. B. Zinkphosphat in Betracht.

Sonstige Zuschlagstoffe F) für strahlenhärtbare Formulierungen gibt es in verschiedenen Zusammensetzungen und für diverse Zwecke, z. B. Verlaufsmittel, Mattierungsmittel, Entgasungsmittel und andere.

Einige von Ihnen werden beschrieben in der Broschüre "SELECTED DEGUSSA PRODUCTS FOR RADIATION CURING AND PRINTING INKS", herausgegeben von der Tego Coating & Ink Additives, Essen, 2003. Die Menge an solchen Additiven variiert von 0,01 bis 5 Gew.-%, falls vorhanden.

Ein weiterer Gegenstand der vorliegenden Erfindung ist die Verwendung der erfindungsgemäßen strahlenhärtbaren Formulierungen als Primer, Zwischenschicht, Decklack, Klarlack und/oder in Beschichtungen. Insbesondere bevorzugt ist die Verwendung einer strahlenhärtbaren Formulierung,
bestehend aus
A) mindestens einem strahlenhärtbaren Harz,
B) mindestens 2 Gew.-% mindestens einer oligomeren Siloxan-Komponente bezogen auf die Gesamtformulierung,
C) optional einem Haftvermittler,
D) optional einem strahlenhärtbaren Reaktivverdünner,
E) optional Photoinitiatoren,
F) optional Pigmenten und sonstigen Zuschlagstoffen,
als Primer, Zwischenschicht, Decklack und/oder Klarlack.

Die Auftragung der strahlenhärtbaren Formulierung kann durch in der Lacktechnologie bekannte Applikationstechniken erfolgen, z. B. Rakeln, Walzen, Sprühen oder Spritzen.

Als metallischer Untergrund eignet sich vor allem Stahl, optional vorbehandelt, aber auch Aluminium und sonstige Metalle oder Legierungen, die aus Korrosionsschutzgründen mit einer Beschichtung versehen werden.

Die Aushärtung erfolgt in Anwesenheit von Photoinitiatoren unter UV-Licht oder in Abwesenheit von Photoinitiatoren unter Elektronenstrahlen. Die Eigenschaften der ausgehärteten Lacke sind weitgehend unabhängig von der Aushärtungsmethode.

UV-Härtung und UV-Lampen werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 8, Seiten 453 bis 503.

Ebenfalls Gegenstand der Erfindung ist die Verwendung einer erfindungsgemäßen strahlenhärtbaren Formulierung zur Herstellung von Beschichtungen nach dem Coil Coating-Verfahren, wobei die vorab beschriebenen Vorzugsformen auch für diesen Gegenstand der vorliegenden Erfindung angewendet werden können.

Ein weiterer Gegenstand der vorliegenden Erfindung sind Beschichtungen enthaltend oder basierend auf strahlenhärtbaren Formulierungen gemäß der vorliegenden Erfindung. Dabei sind im Rahmen der vorliegenden Erfindung auch und insbesondere die gehärteten Beschichtungen enthaltend oder basierend auf strahlenhärtbaren Formulierungen mit umfasst.

Die erfindungsgemäße Beschichtung kann entweder allein verwendet werden, oder eine Schicht eines Mehrschichtaufbaus sein. Sie kann beispielsweise als Primer, als Zwischenschicht oder als Deck- oder Klarlack aufgetragen sein. Die über oder unter der erfindungsgemäßen Beschichtung liegenden Schichten können entweder konventionell thermisch ausgehärtet werden, oder aber auch durch Strahlung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

| **Einsatzstoffe** | **Produktbeschreibung, Hersteller** |
|---|---|
| VESTICOAT EP 110 /IBOA | Strahlenhärtbares Harz, Degussa GmbH, Coatings & Colorants, gelöst in 25 % IBOA |
| IBOA | Isobornylacrylat, Cytec, monofunktioneller Reaktivverdünner |
| IRGACURE 184 | Photoinitiator, Ciba |
| Dynasilan GLYMO | 3-Glycidyloxypropyltrimethoxysilan, Degussa GmbH |

### Herstellung eines hydrolysierten Organosilans (Dynasilan Glymo)

10 g Dynasylan GLYMO werden mit 1,14 g Wasser (1,5 mol /mol Si) und 0,2 g Borsäure versetzt und bei 70 °C zwei Stunden gerührt. Anschließend wird bei 1 mbar und 70 °C der angefallene Hydrolysealkohol im Vakuum entfernt. Man erhält ein farbloses Oligomerisat, das mindestens drei Monate lagerstabil ist.

### Allgemeine Herstellvorschrift zur Formulierung und Aushärtung von UV-Lacken

Alle Formulierungsbestandteile werden zusammengegeben und 20 min mittels eines Magnetrührers gerührt.

Die gebrauchsfähige Formulierung wird auf Stahlbleche, (Bonder Bleche 1303) aufgerakelt und nachfolgend unter einer UV-Lampe (3 m/min, Minicure, Quecksilberdampflampe, 80 W/cm, Technigraf) ausgehärtet.

Alle Angaben in Gew.-% sind bezogen auf das Gesamtgewicht der Formulierung.

| **Versuch** | **1** | **2*** |
|---|---|---|
| Vesticoat EP 110 / IBOA | 48,5 | 48,5 |
| IBOA | 36,8 | 43,5 |
| Hydrolysiertes Dynasilan Glymo | 6,7 | - |
| IRGACURE 184 | 8 | 8 |
| 240 h Salzsprühtest (Unterwanderung [cm]) | 2,7 | 8,1 |
| Errichsentiefung [mm] | 9,5 | 10,5 |
| Schichtdicke [µm] | 28 - 32 | 31 - 34 |

| | | |
|---|---|---|
| * Nicht erfindungsgemäßer Vergleichsversuch | | |

Alle Lacke weisen eine ausreichende Flexibilität auf (Errichsentiefung > 5 mm). Lediglich die erfindungsgemäße Formulierung zeigt einen ausreichenden Korrosionsschutz (Unterwanderung < 5 cm) nach 240 h Salzsprühtest (DIN 53167)

## Patentansprüche

1. Strahlenhärtbare Formulierungen umfassend mindestens ein strahlenhärtbares Harz und mindestens 2 Gew.-% mindestens einer oligomeren Siloxan-Komponente, bezogen auf die Gesamtformulierung, wobei die oligomeren Siloxan-Komponenten erhältlich sind durch kontrollierte Hydrolyse und Kondensation mindestens eines Epoxy-funktionellen Silans der allgemeinen Formel I
R¹-SIR'ₘ(OR)₃₋ₘ (I),
worin R¹ für eine Gruppe 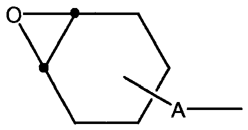 oder 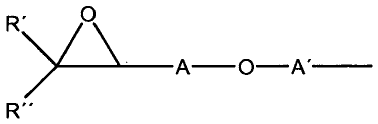 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, Gruppen A und A' gleich oder verschieden sind und jeweils für eine bivalente Alkylgruppe mit 1 bis 10 C-Atomen stehen, und m gleich 0 oder 1 ist, in Gegenwart von Borsäure.

2. Strahlenhärtbare Formulierungen gemäß Anspruch 1, bestehend aus
A) mindestens einem strahlenhärtbaren Harz
B) mindestens 2 Gew.-% mindestens einer oligomeren Siloxan-Komponente, bezogen auf die Gesamtformulierung, wobei die oligomeren Siloxan-Komponenten erhältlich sind durch kontrollierte Hydrolyse und Kondensation mindestens eines Epoxy-funktionellen Silans der allgemeinen Formel I
R¹-SiR'ₘ(OR)₃₋ₘ (I),
worin R¹ für eine Gruppe 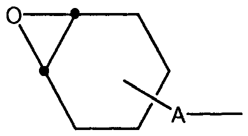 oder 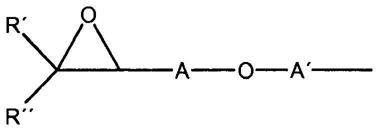 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, Gruppen A und A' gleich oder verschieden sind und jeweils für eine bivalente Alkylgruppe mit 1 bis 10 C-Atomen stehen, und m gleich 0 oder 1 ist, in Gegenwart von Borsäure.
C) optional einem oder mehreren Haftvermittlern,
D) optional einem oder mehreren strahlenhärtbaren Reaktivverdünnern,
E) optional einem oder mehreren Photoinitiatoren,
F) optional einem oder mehreren Pigmenten und sonstigen Zuschlagstoffen.

3. Strahlenhärtbare Formulierungen gemäß Anspruch 1 oder 2, **dadurch gekennzeichnet, dass** als strahlenhärtbares Harz) Epoxyacrylate, Polyesteracrylate, Polyetheracrylate, Polyacrylatacrylate, und Urethanacrylate, allein oder in Mischungen, enthalten sind.

4. Strahlenhärtbare Formulierungen nach einem oder mehreren der Ansprüche 1 bis 3, **dadurch gekennzeichnet, dass** als strahlenhärtbares Harz Polyesterurethanacrylate enthalten sind.

5. Strahlenhärtbare Formulierungen nach einem oder mehreren der Ansprüche 1 bis 4, **dadurch gekennzeichnet, dass** die Menge des strahlenhärtbaren Harzes 5 bis 95 Gew.-% beträgt.

6. Strahlenhärtbare Formulierungen nach Anspruch 1 oder 2, **dadurch gekennzeichnet, dass** bei der Hydrolyse und Kondensation zusätzlich mindestens ein weiteres organofunktionelles Silan der allgemeinen Formel II
R²-SiR'ₙ(OR)₃₋ₙ (II)
worin R² eine lineare, verzweigte oder cyclische, gegebenenfalls substituierte Alkylgruppe mit 1 bis 20 C-Atomen darstellt, R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist, anwesend ist.

7. Strahlenhärtbare Formulierungen nach einem oder mehreren der Ansprüche 1 bis 6, **dadurch gekennzeichnet, dass** der Anteil an oligomeren Siloxan-Komponenten in der Gesamtformulierung 2-25 Gew.-% beträgt.

8. Strahlenhärtbare Formulierungen nach einem oder mehreren der Ansprüche 1 bis 7, **dadurch gekennzeichnet, dass** das Silan der Formel I 3-Glycidyloxypropyltrimethoxy- oder ethoxysilan ist.

9. Strahlenhärtbare Formulierungen nach einem oder mehreren der Ansprüche 2 bis 8, **dadurch gekennzeichnet, dass** als Haftvermittler C), Phosphorsäure und/oder Phosphonsäure und/oder deren Umsetzungsprodukte mit funktionalisierten Acrylaten, in Mengen von 0,1 bis 10 Gew.-%, enthalten sind.

10. Strahlenhärtbare Formulierungen nach einem oder mehreren der Ansprüche 2 bis 9, **dadurch gekennzeichnet, dass** der Reaktivverdünner D) ausgewählt ist aus Isobornylacrylat, Hydroxypropylmethacrylat, Trimethylolpropanformalmonoacrylat, Tetrahydrofufurylacrylat, Phenoxyethylacrylat, Trimethylenpropantriacrylat, Dipropylenglycoldiacrylat, Tripropylenglycoldiacrylat, Hexandioldiacrylat, Pentaerythrittetraacrylat, Laurylacrylat, und/oder propoxilierten oder ethoxilierten Varianten dieser Reaktivverdünner, und/oder urethanisierten Reaktivverdünnern.

11. Verwendung einer strahlenhärtbaren Formulierung gemäß einem oder mehreren der Ansprüche 1 bis 10 als Primer, Zwischenschicht, Decklack, Klarlack und/oder in Beschichtungen oder zur Herstellung von Beschichtungen nach dem Coil Coating-Verfahren.

12. Beschichtungen enthaltend oder basierend auf strahlenhärtbaren Formulierungen gemäß einem oder mehreren der Ansprüche 1 bis 10.

## Claims

1. Radiation-curable formulations comprising at least one radiation-curable resin and at least 2% by weight of at least one oligomeric siloxane component, based on the total formulation, the oligomeric siloxane components are obtainable by controlled hydrolysis and condensation of at least one epoxy-functional silane of the general formula I
R¹-SiR'ₘ(OR)₃₋ₘ (I),
in which R¹ is a group 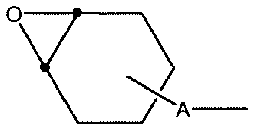 or 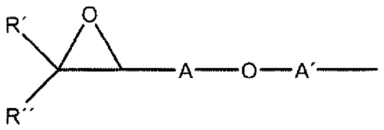 and the groups R, R' and R" are alike or different and in each case are a hydrogen (H) or are a linear, branched or cyclic, unsubstituted or substituted alkyl group having 1 to 6 C atoms, groups A and A' are alike or different and in each case are a divalent alkyl group having 1 to 10 C atoms, and m is 0 or 1, in the presence of boric acid.

2. Radiation-curable formulations according to Claim 1, composed of
A) at least one radiation-curable resin,
B) at least 2% by weight of at least one oligomeric siloxane component, based on the total formulation, wherein the oligomeric siloxane components are obtainable by controlled hydrolysis and condensation of at least one epoxy-functional silane of the general formula I
R¹-SiR'ₘ(OR)₃₋ₘ (I),
in which R¹ is a group 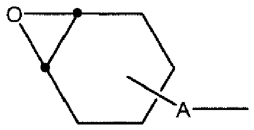 or 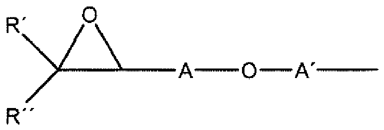 and the groups R, R' and R" are alike or different and in each case are a hydrogen (H) or are a linear, branched or cyclic, unsubstituted or substituted alkyl group having 1 to 6 C atoms, groups A and A' are alike or different and in each case are a divalent alkyl group having 1 to 10 C atoms, and m is 0 or 1, in the presence of boric acid
C) optionally one or more adhesion promoters,
D) optionally one or more radiation-curable reactive diluents,
E) optionally one or more photoinitiators,
F) optionally one or more pigments and other adjuvants.

3. Radiation-curable formulations according to Claim 1 or 2, **characterized in that** epoxy acrylates, polyester acrylates, polyether acrylates, polyacrylate acrylates, and urethane acrylates, alone or in a mixture, are included as radiation-curable resin.

4. Radiation-curable formulations according to one or more of Claims 1 to 3, **characterized in that** polyesterurethane acrylates are included as radiation-curable resin.

5. Radiation-curable formulations according to one or more of Claims 1 to 4, **characterized in that** the amount of the radiation-curable resin is 5% to 95% by weight.

6. Radiation-curable formulations according to Claim 1 or 2, **characterized in that** during the hydrolysis and condensation there is additionally at least one further organofunctional silane present, of the general formula II
R²-SiR'ₙ(OR)₃₋ₙ (II)
in which R² is a linear, branched or cyclic, unsubstituted or substituted alkyl group having 1 to 20 C atoms, R' is methyl, groups R independently are a hydrogen or are a linear, branched or cyclic alkyl group having 1 to 6 C atoms, and n is 0 or 1.

7. Radiation-curable formulations according to one or more of Claims 1 to 6, **characterized in that** the fraction of oligomeric siloxane components as a proportion of the total formulation is 2-25% by weight.

8. Radiation-curable formulations according to one or more of Claims 1 to 7, **characterized in that** the silane of formula I is 3-glycidyloxypropyltrimethoxysilane or 3-glycidyloxypropyltriethoxysilane.

9. Radiation-curable formulations according to one or more of Claims 2 to 8, **characterized in that** phosphoric acid and/or phosphonic acid and/or reaction products thereof with functionalized acrylates, in amounts from 0.1% to 10% by weight, are included as adhesion promoter(s) C).

10. Radiation-curable formulations according to one or more of Claims 2 to 9, **characterized in that** the reactive diluent D) is selected from isobornyl acrylate, hydroxypropyl methacrylate, trimethylolpropane formal monoacrylate, tetrahydrofurfuryl acrylate, phenoxyethyl acrylate, trimethylolpropane triacrylate, dipropylene glycol diacrylate, tripropylene glycol diacrylate, hexanediol diacrylate, pentaerythritol tetraacrylate, lauryl acrylate, and/or propoxylated or ethoxylated variants of these reactive diluents, and/or urethanized reactive diluents.

11. Use of a radiation-curable formulation according to one or more of Claims 1 to 10 as a primer, intercoat, topcoat or clearcoat material and/or in a coating or for producing a coating by the coil coating process.

12. Coatings containing or based on radiation-curable formulations according to one or more of Claims 1 to 10.

## Revendications

1. Formulations durcissables par des rayons, comprenant au moins une résine durcissable par des rayons et au moins 2% en poids d'au moins d'un composant oligomère de siloxane, par rapport à la totalité de la formulation, les composants oligomères de siloxane pouvant être obtenus par une hydrolyse contrôlée et une condensation d'au moins un silane à fonctionnalité époxy de la formule générale I
R¹-SiR'ₘ(OR)₃₋ₘ (I),
dans laquelle R¹ signifie un groupe 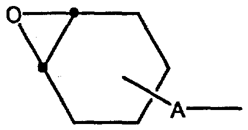 ou 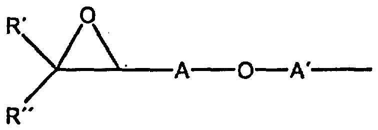 et les groupes R, R' et R" " sont identiques ou différents et représentent à chaque fois hydrogène (H) ou un groupe alkyle linéaire, ramifié ou cyclique, le cas échéant substitué, comprenant 1 à 6 atomes de carbone, les groupes A et A' sont identiques ou différents et représentent à chaque fois un groupe alkyle divalent comprenant 1 à 10 atomes de carbone et m vaut 0 ou 1, en présence d'acide borique.

2. Formulations durcissables par des rayons selon la revendication 1, constituées par
A) au moins une résine durcissable par des rayons
B) au moins 2% en poids d'au moins un composant oligomère de siloxane, par rapport à la totalité de la formulation, les composants oligomères de siloxane pouvant être obtenus par une hydrolyse contrôlée et une condensation d'au moins un silane à fonctionnalité époxy de la formule générale I
R¹-SiR'ₘ(OR)₃₋ₘ (I),
dans laquelle R¹ signifie un groupe 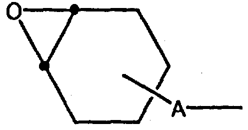 ou 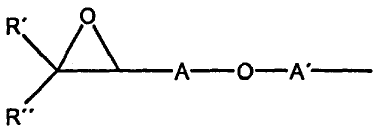 et les groupes R, R' et R" sont identiques ou différents et représentent à chaque fois hydrogène (H) ou un groupe alkyle linéaire, ramifié ou cyclique, le cas échéant substitué, comprenant 1 à 6 atomes de carbone, les groupes A et A' sont identiques ou différents et représentent à chaque fois un groupe alkyle divalent comprenant 1 à 10 atomes de carbone et m vaut 0 ou 1, en présence d'acide borique,
C) éventuellement un ou plusieurs promoteurs d'adhérence,
D) éventuellement un ou plusieurs diluants réactifs durcissables par des rayons,
E) éventuellement un ou plusieurs photo-initiateurs,
F) éventuellement un ou plusieurs pigments et d'autres additifs.

3. Formulations durcissables par des rayons selon la revendication 1 ou 2, **caractérisées en ce qu'**elles contiennent, comme résine durcissable par des rayons des époxyacrylates, des polyesteracrylates, des polyétheracrylates, des polyacrylate-acrylates et des acrylates d'uréthane, seuls ou en mélange.

4. Formulations durcissables par des rayons selon l'une ou plusieurs des revendications 1 à 3, **caractérisées en ce qu'**elles contiennent comme résine durcissable par des rayons des polyester-acrylates d'uréthane.

5. Formulations durcissables par des rayons selon l'une ou plusieurs des revendications 1 à 4, **caractérisées en ce que** la quantité de résine durcissable par des rayons est de 5 à 95% en poids.

6. Formulations durcissables par des rayons selon la revendication 1 ou 2, **caractérisées en ce que** lors de l'hydrolyse et de la condensation, en outre au moins un autre silane organofonctionnel de formule générale II est présent
R²-SiR'ₙ(OR)₃₋ₙ (II)
dans laquelle R² représente un groupe alkyle linéaire, ramifié ou cyclique, le cas échéant substitué comprenant 1 à 20 atomes de carbone, R' signifie méthyle, les groupes R représentent, indépendamment, hydrogène ou un groupe alkyle linéaire, ramifié ou cyclique comprenant 1 à 6 atomes de carbone et n vaut 0 ou 1.

7. Formulations durcissables par des rayons selon l'une ou plusieurs des revendications 1 à 6, **caractérisées en ce que** la proportion de composants oligomères de siloxane dans la totalité de la formulation est de 2-25% en poids.

8. Formulations durcissables par des rayons selon l'une ou plusieurs des revendications 1 à 7, **caractérisées en ce que** le silane de formule I est le 3-glycidyloxypropyltriméthoxysilane ou le 3-glycidyloxypropyltriéthoxysilane.

9. Formulations durcissables par des rayons selon l'une ou plusieurs des revendications 2 à 8, **caractérisées en ce qu'**elles contiennent comme promoteur d'adhérence C) de l'acide phosphorique et/ou de l'acide phosphonique et/ou leurs produits de transformation avec des acrylates fonctionnalisés, en des quantités de 0,1 à 10% en poids.

10. Formulations durcissables par des rayons selon l'une ou plusieurs des revendications 2 à 9, **caractérisées en ce que** le diluant réactif D) est choisi parmi l'acrylate d'isobornyle, le méthacrylate d'hydroxypropyle, le monoacrylate de triméthylolpropane-formal, l'acrylate de tétrahydrofufuryle, l'acrylate de phénoxyéthyle, le triacrylate de triméthylènepropane, le diacrylate de dipropylèneglycol, le diacrylate de tripropylèneglycol, le diacrylate d'hexanediol, le tétraacrylate de pentaérythritol, l'acrylate de lauryle et/ou les variantes propoxylées ou éthoxylées de ces diluants réactifs et/ou les diluants réactifs uréthanisés.

11. Utilisation d'une formulation durcissable par des rayons selon l'une ou plusieurs des revendications 1 à 10 comme apprêt, couche intermédiaire, laque de recouvrement, laque claire et/ou dans des revêtements ou pour la préparation de revêtements selon le procédé de revêtement de bobines.

12. Revêtements contenant ou à base de formulations durcissables par des rayons selon l'une ou plusieurs des revendications 1 à 10.
